# FASCICULE DE BREVET EUROPEEN

(11) **EP 0 325 520 B1**
(45) Date de publication et mention de la délivrance du brevet: **22.03.1995**
(21) Numéro de dépôt: 89400123.9
(22) Date de dépôt: 17.01.1989
(51) Int. Cl.: B60R 16/02, H02J 7/14, H05B 3/26

(54) **Circuit d'alimentation bi-tension pour véhicule automobile**
Kraftfahrzeugversorgungsschaltung mit zwei Betriebsspannungen
Dual tension supply circuit for an automotive vehicle

(30) Priorité: 20.01.1988 DE 3801478
(43) Date de publication de la demande: 26.07.1989
(73) Titulaire: SAINT-GOBAIN VITRAGE, 92400 Courbevoie (FR); VEGLA Vereinigte Glaswerke GmbH, D-52066 Aachen (DE)
(72) Inventeur: Sauer, Gerd, D-5190 Stolberg-Venwegen (DE)
(74) Mandataire: Muller, René

(56) Documents cités:
- EP-A- 0 246 976
- EP-A- 0 256 689
- DE-A- 2 810 201
- GB-A- 1 483 033
- GB-A- 2 087 173
- US-A- 4 127 782
- US-A- 4 604 528
- US-A- 4 673 797
- US-A- 4 678 982
- US-A- 4 692 684

## Description

La présente invention concerne un circuit d'alimentation de courant électrique pour véhicule automobile fournissant deux tensions d'utilisation différentes à savoir la tension continue du réseau de bord habituelle et une tension continue supérieure à celle-ci, par exemple pour alimenter un vitrage chauffant à résistance chauffante en couche mince, le circuit comprenant une génératrice et un régulateur de tension.

Le circuit d'alimentation de courant électrique habituel pour véhicule automobile comprend une génératrice de courant triphasé constituée d'un rotor parcouru par un courant continu et d'un enroulement triphasé monté dans le stator. La tension triphasée produite lors de la rotation du rotor est convertie dans un pont redresseur en une tension continue pulsée et est fournie au réseau de bord. En service, une régulation de tension sur la tension de charge maximale de 14,2 volts est nécessaire pour la batterie. Cette régulation de tension est assurée par le régulateur de tension qui coupe périodiquement le courant d'excitation dans le rotor.

Pour certains appareils électriques, par exemple pour des vitrages chauffants à couche mince, la tension du réseau de bord habituelle de 12 volts est insuffisante. Ces appareils exigent une tension de 50 volts et plus pour déployer l'activité souhaitée. Etant donné que les autres appareils doivent toutefois être alimentés au moyen de la tension du réseau de bord de 12 volts, on est amené à prévoir deux réseaux avec des tensions différentes.

Une méthode possible pour obtenir deux tensions différentes est notamment décrite dans la demande de brevet EP-A-0 246 976. Elle consiste à assurer le fonctionnement du vitrage chauffant, en séparant la génératrice du réseau de bord et en la règlant sur la tension supérieure nécessaire pour le vitrage chauffant. Le réseau de bord peut alors être alimenté par la batterie, pendant ce temps. Dans le cas de ce circuit, la batterie doit toutefois assurer entièrement l'alimentation du réseau de bord pendant la durée pendant laquelle le vitrage chauffant est enclenché, de sorte qu'elle se décharge rapidement. Etant donné qu'en cas de disparition de la tension de bord, le véhicule n'est plus à même de circuler, un circuit de contrôle onéreux doit être prévu pour surveiller l'état de charge de la batterie. Le circuit devient de ce fait relativement coûteux et la décharge rapide de la batterie en diminue la durée de vie.

Une autre méthode possible pour produire les deux tensions différentes consiste à produire la tension supérieure nécessaire pour le fonctionnement du vitrage chauffant à partir de la tension du réseau de bord. A cet effet, un convertisseur de tension continue est nécessaire, la tension continue du réseau de bord étant initialement convertie en une tension alternative qui est amenée par transformation au niveau de tension supérieure et est ensuite à nouveau redressée. Des convertisseurs élévateurs de ce type ont cependant un mauvais rendement, en particulier à cause de la chute de tension importante au niveau du commutateur à semi-conducteur du côté primaire. La puissance élevée qui doit être communiquée dans le cas de vitrages chauffants rend les convertisseurs de ce type, en outre, volumineux et onéreux.

Une méthode différente est décrite dans la demande de brevet GB 2 087 173 A. Dans ce cas, lorsque le vitrage chauffant est en circuit, la tension du réseau de bord est dérivée de la tension supérieure par un branchement en série du vitrage chauffant et du réseau du bord. Cette méthode nécessite l'utilisation d'un commutateur, permettant la mise hors circuit du vitrage chauffant, suffisamment important pour supporter des intensités très importantes au moment de la commutation.

Une autre méthode décrite dans le brevet US 4 604 528 décrit un circuit permettant d'obtenir deux tensions. Mais ce circuit nécessite deux régulateurs, ce qui le rend plus onéreux.

Une dernière méthode pour obtenir deux tensions est décrite dans le brevet US 4 692 684. Il s'agit d'un circuit où l'alternateur est associé à un transformateur. De cette façon, il est possible d'obtenir deux tensions de courant alternatif. Mais pour obtenir deux tensions de courant continu, il faut disposer deux ponts redresseurs, ce qui complique le circuit et augmente son coût.

L'invention a pour but de procurer une méthode économique pour produire simultanément la tension du réseau de bord et une tension supérieure à celle-ci pour l'alimentation d'un vitrage chauffant à couche mince au moyen de la génératrice.

Suivant l'invention, ce but est réalisé par le fait que la génératrice est prévue pour une tension supérieure à la tension du réseau de bord, qui correspond au moins à la tension nécessaire au fonctionnement d'un dispositif tel qu'un vitrage chauffant, par le fait qu'un inverseur connecte la sortie de la génératrice au dispositif et à l'entrée d'un convertisseur continu-continu lorsque la tension supérieure est requise et, qu'en même temps, le régulateur, en réponse au changement de position d'un contact de l'inverseur connecté à l'entrée du régulateur est réglé sur un niveau de tension supérieur, et la tension habituelle du réseau de bord est réglée à la valeur requise par le convertisseur et que lorsque la tension supérieure n'est pas requise, le dispositif est mis hors circuit par changement de position de l'inverseur, le régulateur est amené, par le changement de position de ce contact à réguler la tension de la génératrice sur la tension de bord du réseau, et la génératrice alimente directement le réseau de bord.

L'invention garantit que la batterie ne se décharge pas pendant le fonctionnement du dispositif tel qu'un vitrage chauffant. Et étant donné que le convertisseur fonctionne comme convertisseur abaisseur, d'une part les exigences imposées sur les composants et, d'autre part, les pertes électriques dans le commutateur à semi-conducteur ne sont pas aussi élevées que dans le cas du convertisseur élévateur mentionné plus haut ; les coûts en sont d'autant plus favorables.

Le circuit décrit ainsi que des développements de ce circuit seront expliqués ci-après plus en détail avec référence aux dessins annexés, dans lesquels :
la figure 1 est le schéma synoptique d'un circuit d'alimentation de courant électrique selon une forme d' exécution, de l'invention,
la figure 2 illustre une première forme d'exécation d'un convertisseur de tension utilisé dans le circuit de la figure 1,
la figure 3 illustre une autre forme d'exécution d'un convertisseur de tension utilisé dans le circuit de la figure 1,
la figure 4 illustre le schéma synoptique d'un circuit d'alimentation de courant électrique de l'art antérieur,
la figure 5 illustre un exemple de réalisation d'un circuit de sécurité supplémentaire.

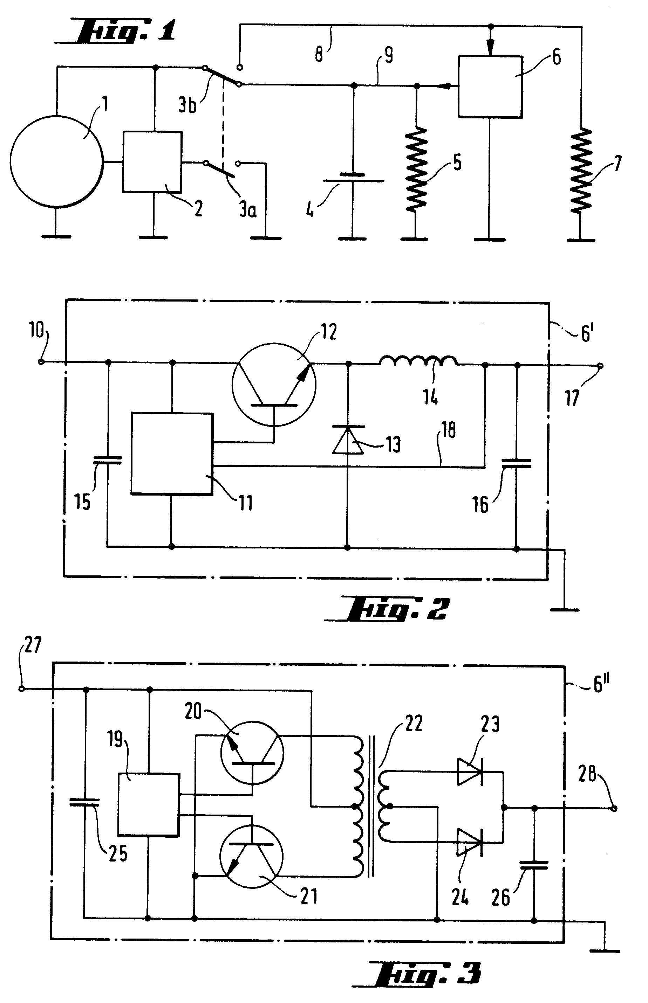

Le circuit d'alimentation de courant électrique illustré sur la figure 1 comprend la génératrice de courant triphasé 1 pourvue d'un pont redresseur, le régulateur 2, l'inverseur 3a, 3b, la batterie 4, les appareils 5 du réseau de bord représentés schématiquement par une résistance, le convertisseur de tension 6 et le vitrage chauffant 7 représenté schématiquement par une résistance.

Dans l'état représenté, le vitrage chauffant 7 n'est pas en circuit. La tension continue fournie par la génératrice 1 et limitée par le régulateur 2 à la tension du réseau de bord alimente, par l'intermédiaire du contact de l'inverseur 3b, directement les appareils 5 du réseau de bord et la batterie 4. Pour la mise en circuit du vitrage chauffant 7, les inverseurs 3a et 3b sont chacun amenés dans leur autre position dans laquelle la connexion aux appareils 5 du réseau de bord et à la batterie 4 est interrompue par l'inverseur 3b et la tension de sortie de la génératrice 1 est appliquée directement au vitrage chauffant 7 par l'intermédiaire de la ligne 8. En même temps, à l'intervention de l'inverseur 3a, le régulateur 2 est réglé sur un niveau de tension supérieur de, par exemple, 50 volts, de sorte que la puissance souhaitée est disponible pour le vitrage chauffant 7. Pour alimenter le réseau de bord, le convertisseur de tension 6 est simultanément activé et produit à partir de la tension continue de la génératrice fournie par la ligne 8, une tension continue de 12 à 14 volts qui est appliquée aux appareils 5 et à la batterie 4 par la ligne 9.

La figure 2 illustre le convertisseur représenté par le bloc 6 sur la figure 1, sous la forme d'un régulateur hacheur simple 6'. A l'entrée 10 est appliquée la tension de la génératrice d'environ 50 volts. Le transistor 12 est rendu conducteur en direction de la bobine 14 par le régulateur par commutation 11, jusqu'à l'apparition d'une tension de 14 volts sur la sortie 17. Cette valeur est renvoyée par la ligne 18 au circuit 11, qui fait à nouveau passer le transistor 12 sur non-conduction. Le champ magnétique produit par le passage du courant dans la bobine 14 s'annule à présent et produit ainsi, par l'intermédiaire de la diode 13, un courant sur la sortie 17. La tension de sortie diminue lorsque le champ magnétique s'affaiblit. Ceci permet au régulateur par commutation 11 de faire à nouveau passer le transistor 12 sur conduction. Pour maintenir l'entrée et la sortie à l'abri des sauts de courant du contacteur, des condensateurs accumulateurs d'énergie 15 et 16 sont prévus. La fréquence de commutation du contacteur est prédéfinie par le régulateur par commutation 11. Elle est liée aux dimensions des composants 14, 15 et 16. Pour garder les composants les plus petits possibles, il faut que la fréquence de commutation soit supérieure à 10 kHz. La puissance pulsée est prise sur un enroulement triphasé qui nécessite une charge symetrique. C'est pour cette raison également que la fréquence de fonctionnement doit être la plus élevée possible. Elle doit au moins excéder la fréquence de commutation d'un facteur 5.

La figure 3 illustre un transducteur push-pull 6'' qui peut être utilisé en lieu et place du transducteur simple 6' de la figure 2. Il est constitué d'un régulateur par commutation 19 et de deux transistors de commutation 20 et 21 qui sont alternativement conducteurs et non conducteurs. Les transistors sont connectés à un transformateur 22 qui présente du côté primaire une prise médiane, connectée à l'entrée 27 du transducteur. Le fait que la moitié supérieure et la moitié inférieure de la bobine sont alternativement parcourues par du courant engendre dans le transformateur un champ alternatif qui sort par l'enroulement secondaire. Les deux diodes 23 et 24 redressent la tension alternative. En fonction du rapport de conversion du transformateur 22, un rapport de tension s'établit entre l'entrée 27 et la sortie 28. Les condensateurs stockeurs 25 et 26 empêchent que des chocs de commutation de courant se fassent sentir à l'extérieur du transducteur. Pour la fréquence de fonctionnement, on peut se référer à ce qui a été décrit à propos du transducteur simple de la figure 2.

La figure 4 illustre un circuit connu de l'art antérieure. Sur cette figure 4, le vitrage chauffant 30 qui est représenté sous la forme d'une résistance, est, lorsqu'il est en circuit, connecté en série avec le réseau de bord dont les appareils 31 sont représentés dans leur ensemble sous la forme d'une résistance. Le schéma illustre l'état de commutation dans lequel le vitrage chauffant est hors circuit. Dans cet état, le vitrage chauffant est court-circuité par l'interrupteur fermé 32, de sorte que la génératrice 33, qui est réglée par le régulateur 34 sur la tension du réseau de bord, est connectée directement au réseau de bord, c'est-à-dire aux appareils 31 et à la batterie 35. La commutation sur le mode de chauffage s'effectue par l'intermédiaire du commutateur à bascule 36. Ce commutateur assure que, d'une part l'interrupteur 32 soit ouvert, de sorte que le vitrage chauffant 30 sert à présent directement de résistance additionnelle pour les appareils 31 dépendant du réseau de bord, et qu'ensuite, d'autre part, le régulateur 34 soit inversé, de sorte que la tension de la génératrice est à partir de ce moment réglée sur la tension supérieure exigée.

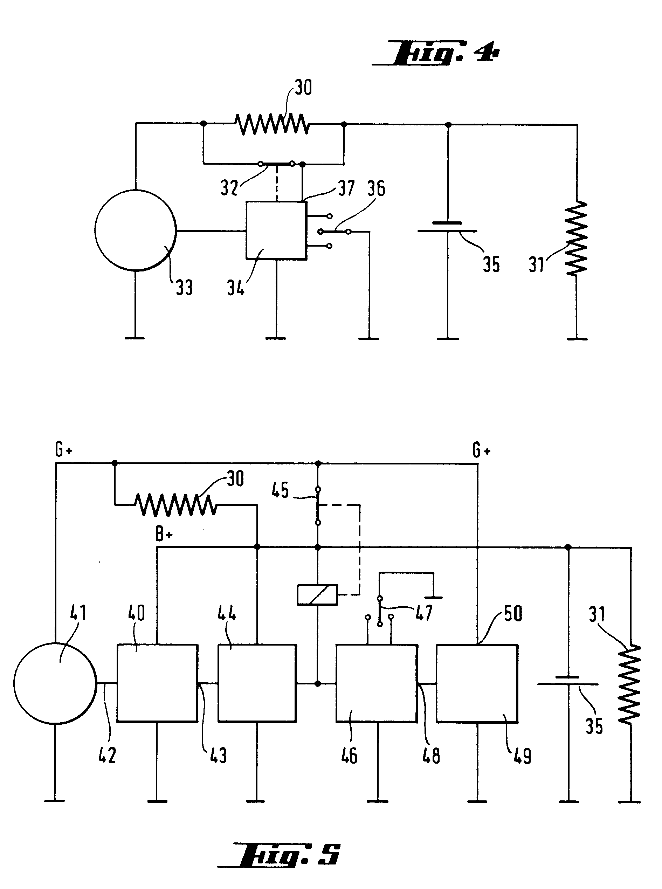

Il est à conseiller de compléter le circuit d'alimentation de courant par des éléments de contrôle supplémentaires pour garantir en toute circonstance un état de fonctionnement sûr pour ce système. Ces éléments de contrôle supplémentaires peuvent essentiellement être utilisés tant dans la forme d'exécution décrite à propos de la figure 1 selon l'invention que dans celle de la figure 4 qui illustre un art antérieur connu. Ces éléments ont été représentés sur la figure 5 qui n'illustre pas directement l'invention car elle représente une combinaison de ces éléments avec l'art antérieur de la figure 4.

A cause de la puissance de chauffage élevée du vitrage chauffant, il est, par exemple, à conseiller de limiter le temps de chauffage pour éviter une surchauffe du vitrage. L'expérience a montré que le temps de chauffage nécessaire pour éliminer la couche de buée est au maximum de 5 minutes. Pour des températures au-dessus de zéro, ce temps peut cependant être trop long, de sorte que le vitrage chauffant devient trop chaud. Par conséquent, le temps d'enclenchement ou de fonctionnement du vitrage chauffant est réduit progressivement à mesure que la température augmente, à partir d'une durée d'environ 5 minutes à 0°C ou à des températures plus basses et ce d'une manière telle que pour une température d'environ 25°C, elle soit ramenée à 1 minute et que pour une température d'environ 30°C, elle soit ramenée à zéro. A partir d'une température d'environ 30°C, le chauffage du vitrage chauffant ne serait donc plus possible. A titre de grandeur pilote pour cette régulation, on choisit avantageusement une température représentative à l'intérieur du véhicule.

De plus, il peut être avantageux de prévoir une limitation de surtension. En effet, en cas de bris du vitrage chauffant ou d'un câble, des surtensions dangereuses peuvent surgir. En vue de limiter la tension, la tension de sortie de la génératrice est avantageusement renvoyée au régulateur. Lors de l'apparition d'une tension qui est supérieure à une tension présélectionnée de, par exemple, 80 volts, le système régulateur interrompt le mode de chauffage et commute sur le mode de fonctionnement normal.

De plus, une limitation d'intensité est avantageusement prévue pendant l'opération de commutation. Des alternateurs de grande puissance peuvent en effet fournir des intensités dépassant 100 ampères au réseau de bord. Ce courant doit être transféré par le commutateur. Pour que le commutateur ne devienne pas trop grand et trop onéreux, la tension de la génératrice est abaissée brièvement pendant l'enclenchement et le déclenchement du vitrage chauffant.

Un exemple d'un circuit d'alimentation de courant électrique équipé d'un circuit de contrôle qui satisfait à ces exigences est illustré sur la figure 5. Le régulateur 40 pilote la génératrice 41 par l'intermédiaire de la ligne 42 sur une tension de réseau de bord constante B+ au moyen de laquelle la batterie 35 et les appareils de bord 31 sont alimentés. Il possède une entrée supplémentaire 43 par laquelle l'excitation du champ de la génératrice 41 peut être coupée. L'entrée 43 est pilotée par un temporisateur 44 qui, lors de la commutation du commutateur de charge 45, agit brièvement sur le régulateur 40 pour obtenir une régulation sur une tension plus basse. Le temporisateur 44 est, pour sa part, activé par l'horloge principale 46. L'horloge principale 46 est enclenchée ou déclenchée à la main par l'interrupteur à bascule 47. Un capteur de température intégré dans l'horloge principale 46 prédéfinit la durée d'enclenchement qui est comprise entre 0 et 5 minutes. L'horloge principale 46 ouvre l'interrupteur de charge 45 et permet ainsi le passage du courant de la génératrice dans le vitrage chauffant 30. L'horloge principale 46 possède une entrée prioritaire 48 pour le déclenchement. Cette entrée 48 est connectée à un commutateur à seuil 49. La tension de génératrice G+ est appliquée à l'entrée 50 du commutateur à seuil 49. Si la tension de la génératrice G+ dépasse un seuil de sécurité d'environ 80 volts, le commutateur à seuil 49 envoie une impulsion de commande à l'entrée 48 de l'horloge principale 46, ce qui provoque l'interruption immédiate du chauffage du vitrage chauffant 30.

## Revendications

1. Circuit d'alimentation de courant électrique pour véhicule automobile fournissant deux tensions d'utilisation différentes, à savoir la tension continue du réseau de bord habituelle et une tension continue supérieure à celle-ci requise pour alimenter un dispositif (7), tel qu'un vitrage chauffant à résistance chauffante en couche mince, le circuit comprenant une génératrice (1) prévue pour une tension supérieure correspondant au moins à la tension nécessaire au fonctionnement du dispositif (7), caractérisé en ce qu'un inverseur (3) connecte la sortie de la génératrice (1) au dispositif (7) et à l'entrée d'un convertisseur continu-continu (6) lorsque la tension supérieure est requise, et qu'en même temps le régulateur (2), en réponse au changement de position d'un contact (3a) de l'inverseur (3) connecté à l'entrée du régulateur (2) est réglé sur un niveau de tension supérieur, et la tension habituelle du réseau de bord est réglée à la valeur requise par le convertisseur (6) et en ce que lorsque la tension supérieure n'est pas requise, le dispositif (7) est mis hors circuit par changement de position de l'inverseur (3), le régulateur (2) est amené, par le changement de position de ce contact (3a) à réguler la tension de la génératrice (1) sur la tension de bord du réseau, et la génératrice alimente directement le réseau de bord (5).

2. Circuit d'alimentation de courant électrique suivant la revendication 1, caractérisé en ce qu'un régulateur hacheur simple (6') est utilisé comme convertisseur de tension.

3. Circuit d'alimentation de courant électrique suivant la revendication 1, caractérisé en ce qu'un transducteur push-pull (6'') est utilisé comme convertisseur de tension.

4. Circuit d'alimentation de courant électrique suivant la revendication 2 ou 3, caractérisé en ce que la fréquence de commutation du convertisseur (6) vaut au moins le quintuple de la fréquence de commutation maximum de la génératrice.

5. Circuit d'alimentation de courant électrique suivant l'une des revendications précédentes la tension supérieure étant utilisée pour un vitrage chauffant, caractérisé en ce que, pour éviter une surchauffe du vitrage chauffant (7, 31), le temps d'enclenchement du vitrage chauffant est limité à l'aide d'un circuit limiteur de temps (46).

6. Circuit d'alimentation de courant électrique suivant la revendication 5, caractérisé en ce que, le circuit limiteur de temps (46) est activé par un capteur de température détectant la température du véhicule au voisinage du pare-brise et en ce que le temps d'enclenchement du vitrage chauffant (7, 31) est limité à une valeur allant d'environ 5 minutes à 0°C, jusqu'à environ 1 minute à environ 25°C.

7. Circuit d'alimentation de courant électrique suivant l'une des revendications précédentes, caractérisé en ce que pour éviter des tensions trop élevées en cas de panne dans le système utilisant la tension supérieure, un circuit limiteur de tension (49) est prévu.

8. Circuit d'alimentation de courant électrique suivant la revendication 7, caractérisé en ce que, pour limiter la tension, la tension de sortie de la génératrice est renvoyée au régulateur (2, 40) et, lors de l'apparition d'une tension trop élevée de, par exemple, plus de 80 volts, le régulateur (2, 40) interrompt le mode de chauffage et commute sur le mode de fonctionnement normal.

9. Circuit d'alimentation de courant électrique suivant l'une des revendications précédentes, caractérisé par un circuit limiteur d'intensité (44), par lequel la tension de la génératrice (1, 41) est brièvement abaissée pendant l'enclenchement et le déclenchement du système utilisant la tension supérieure.

## Claims

1. Electrical supply circuit for automobile vehicle supplying two different supply voltages, that is the DC voltage of the normal vehicle load circuit and a DC voltage higher than this required for supplying a device (7), such as a thin-film electrical resistance heating pane, the circuit comprising a generator (1) intended for a higher voltage corresponding at least to the voltage necessary for the operation of the device (7), characterized in that a changeover switch (3) connects the output of the generator (1) to the device (7) and to the input of a DC-DC converter (6) when the higher voltage is required and that at the same time the regulator (2), in response to the change in position of a contact (3a) of the changeover switch (3) connected to the input of the regulator (2) is regulated to a higher voltage level, and the usual voltage of the vehicle load circuit is regulated to the required value by the converter (6) and in that, when the higher voltage is not required, the device (7) is taken out of the circuit by a change in position of the changeover switch (3), the regulator (2) is brought, by the change in position of this contact (3a), to regulate the voltage of the generator (1) to the vehicle load circuit voltage, and the generator directly supplies the vehicle circuit (5).

2. Electrical supply circuit according to Claim 1, characterized in that a simple chopper regulator (6') is used as voltage converter.

3. Electrical supply circuit according to Claim 1, characterized in that a push-pull transductor (6'') is used as voltage converter.

4. Electrical supply circuit according to Claim 2 or 3, characterized in that the switching frequency of the converter (6) is at least five times the maximum switching frequency of the generator.

5. Electrical supply circuit according to one of the preceding Claims, the higher voltage being used for a heating pane, characterized in that, for preventing overheating of the heating pane (7, 31), the switching-in time for the heating pane is limited by means of a time limiter circuit (46).

6. Electrical supply circuit according to Claim 5, characterized in that the time limiter circuit (46) is activated by a temperature sensor detecting the temperature of the vehicle in the vicinity of the windscreen and in that the switching-in time for the heating pane (7, 31) is limited to a value ranging from approximately 5 minutes at 0°C to approximately 1 minute at approximately 25°C.

7. Electrical supply circuit according to one of the preceding Claims, characterized in that, for preventing too high voltages in the case of failure in the system using the higher voltage, a voltage limiter circuit (49) is provided.

8. Electrical supply circuit according to Claim 7, characterized in that, for limiting the voltage, the output voltage of the generator is supplied to the regulator (2, 40) and that, on the appearance of a too high voltage of, for example, more than 80 volts, the regulator (2, 40) interrupts the heating mode and switches to the normal operating mode.

9. Electrical supply circuit according to one of the preceding Claims, characterized by an intensity limiter circuit (44), by which the voltage of the generator (1, 41) is briefly reduced during the switching-in and switching-out of the system using the higher voltage.

## Patentansprüche

1. Elektrische Stromversorgungsschaltung für ein Kraftfahrzeug, mit zwei verschiedenen Verbraucherspannungen, nämlich der üblichen Bordnetz-Gleichspannung und einer dieser gegenüber höheren Gleichspannung zur Stromversorgung einer Vorrichtung (7), beispielsweise einer Heizscheibe mit einem Dünnschicht-Heizwiderstand, mit einem für eine höhere, wenigstens der für den Betrieb der Vorrichtung (7) erforderlichen Spannung entsprechende Spannung ausgelegten Generator (1), **dadurch gekennzeichnet**, daß ein Umschalter (3) den Ausgang des Generators (1) mit der Vorrichtung (7) und mit dem Eingang eines Gleichspannungskonverters (6) verbindet, wenn die höhere Spannung erforderlich ist, und daß gleichzeitig der Regler (2) infolge der Positionsänderung eines Kontaktes (3a) des mit dem Eingang des Reglers (2) verbundenen Umschalters (3) auf ein höheres Spannungsniveau geregelt und die übliche Bordnetzspannung durch den Konverter (6) auf den erforderlichen Wert heruntergeregelt wird, und daß, falls die höhere Spannung nicht erforderlich ist, die Vorrichtung (7) durch Änderung der Position des Umschalters (3) abgeschaltet und der Regler (2) durch die Änderung der Position des Kontaktes (3a) dazu veranlaßt wird, die Spannung des Generators (1) auf die Bordnetzspannung zu regeln, wobei der Generator unmittelbar das Bordnetz (5) versorgt.

2. Elektrische Stromversorgungsschaltung nach Anspruch 1, dadurch gekennzeichnet, daß als Spannungskonverter ein getakteter Durchflußwandler (6') verwendet wird.

3. Elektrische Stromversorgungsschaltung nach Anspruch 1, dadurch gekennzeichnet, daß als Spannungskonverter ein transformierender Gegentaktwandler (6'') verwendet wird.

4. Elektrische Stromversorgungsschaltung nach Anspruch 2 oder 3, dadurch gekennzeichnet, daß die Taktfrequenz des Spannungskonverters (6) wenigstens fünfmal so hoch ist wie die höchste Kommutierungsfrequenz des Generators.

5. Elektrische Stromversorgungsschaltung nach einem der voraufgehenden Ansprüche, wobei die höhere Spannung für eine Heizscheibe verwendet wird, dadurch gekennzeichnet, daß zur Vermeidung einer Überhitzung der Heizscheibe (7,31) die Einschaltzeit der Heizscheibe mit Hilfe einer Zeitbegrenzungsschaltung (46) begrenzt wird.

6. Elektrische Stromversorgungsschaltung nach Anspruch 5, dadurch gekennzeichnet, daß die Zeitbegrenzungsschaltung (46) von einem die Temperatur des Fahrzeugs in der Nähe der Windschutzscheibe erfassenden Temperaturfühler angesteuert und die Einschaltzeit der Heizscheibe (7,31) auf einen Wert von etwa 5 Minuten bei 0°C bis auf etwa 1 Minute bei etwa 25°C begrenzt wird.

7. Elektrische stromversorgungsschaltung nach einem der voraufgehenden Ansprüche, dadurch gekennzeichnet, daß zur Vermeidung von zu hohen Spannungen bei einem Fehler in dem die höhere Spannung verwendenden System eine Spannungsbegrenzungsschaltung (49) vorgesehen ist.

8. Elektrische Stromversorgungsschaltung nach Anspruch 7, dadurch gekennzeichnet, daß zur Spannungsbegrenzung die Ausgangsspannung des Generators auf den Regler (2,40) zurückgeführt und bei Auftreten einer zu hohen Spannung von beispielsweise mehr als 80 Volt der Regler (2,40) den Heizbetrieb unterbricht und auf Normalbetrieb umschaltet.

9. Elektrische Stromversorgungsschaltung nach einem der voraufgehenden Ansprüche, gekennzeichnet durch eine Strombegrenzungsschaltung (44), durch die während des Ein- und Ausschaltens des die höhere Spannung verwendeten Systems die Spannung des Generators (1,41) kurzzeitig abgesenkt wird.
